# EUROPÄISCHE PATENTSCHRIFT

(11) **EP 3 185 405 B1**
(45) Veröffentlichungstag und Bekanntmachung des Hinweises auf die Patenterteilung: **31.10.2018**
(21) Anmeldenummer: 15202549.0
(22) Anmeldetag: 23.12.2015
(51) Int. Cl.: H02K 15/00, H02K 3/42, H02K 3/38, H02K 3/34

(54) **ELEKTROMOTOR**
ELECTRIC MOTOR
MOTEUR ELECTRIQUE

(43) Veröffentlichungstag der Anmeldung: 28.06.2017
(73) Patentinhaber: Grundfos Holding A/S, 8850 Bjerringbro (DK)
(72) Erfinder: Sauer Jensen, Mogens, 8850 Bjerringbro (DK); Møller, Torben, 8600 Silkeborg (DK)
(74) Vertreter: Patentanwälte Vollmann & Hemmer

(56) Entgegenhaltungen:
- WO-A1-2014/002545
- JP-A- 2003 180 044
- US-A- 5 821 652
- US-A- 5 979 087
- US-A1- 2004 056 538
- MAGDUN O ET AL: "Prevention of harmful EDM currents in inverter-fed AC machines by use of electrostatic shields in the stator winding overhang", IECON 2010 - 36TH ANNUAL CONFERENCE ON IEEE INDUSTRIAL ELECTRONICS SOCIETY, IEEE, PISCATAWAY, NJ, USA, 7. November 2010 (2010-11-07), Seiten 962-967, XP031840554, ISBN: 978-1-4244-5225-5

## Beschreibung

Die Erfindung betrifft einen Elektromotor mit einem Stator und einem darin rotierbar gelagerten Rotor, der zum Betrieb mit einem Frequenzumformer geeignet ist.

Es zählt zum Stand der Technik, Elektromotoren, beispielsweise Asynchronmotoren oder Permanentmagnetmotoren mittels eines elektronischen Drehzahlstellers anzusteuern. So werden Frequenzumrichter eingesetzt, welche den Wechsel- oder Drehstrom zunächst in einen Gleichstrom umwandeln, um ihn dann mittels elektronischer Schalter in einen Strom gewünschter Amplitude und Frequenz zu wandeln. Die durch den Frequenzumrichter erzeugten Wechselströme entsprechen zwar hinsichtlich Amplitudenverlauf und Frequenz den gewünschten Vorgaben, weisen jedoch keine reine Sinusform auf, sondern sind aufgrund der schnellen Schaltvorgänge, durch die das jeweilige Signal erzeugt wird, mit hochfrequenten Oberwellen behaftet. Diese hochfrequenten Signalanteile gelangen durch kapazitive Kopplung zunächst vom Stator in den Rotor von dort in das Motorgehäuse. Insbesondere bei Elektromotoren, die einen kugelgelagerten Rotor aufweisen, ergibt sich das Problem, dass diese Ströme im Bereich der Lager vom Rotor auf den Stator übertreten, was dazu führt, dass die Oberfläche der Wälzkörper, insbesondere der Kugeln punktuell verändert wird, wodurch der Lagerverschleiß erhöht und letztlich die Standzeit des Motors verringert wird.

Es zählt zum Stand der Technik, zwischen Wicklungskopf und Rotor Abschirmbleche vorzusehen, um die parasitären Ströme zu verringern, was jedoch in der Praxis nicht ausreicht, um vorzeitige Lagerschäden sicher zu vermeiden. Aus US 5,979,087 A ist es bekannt, solche Abschirmbleche vorzusehen, welche aus miteinander überlappenden Einzelblechabschnitten bestehen, die ringförmig innerhalb der Statorköpfe angeordnet sind und Beine aufweisen, mit welchen Sie in den Statornuten zwischen dem wicklungsfreien Spalt und der Wicklung von der Stirnseite her eingesteckt und befestigt sind.

Weiterhin zählt es zum Stand der Technik, die kapazitive Einkopplung von der Statorwicklung in den Rotor dadurch zu vermindern, dass ein wicklungsfreier Raum zwischen den in den Nuten befindlichen Wicklungsteilen und dem wicklungsfreien Spalt gebildet wird, wie dies aus US 5,821,652 A und WO 2014/002545 A1 bekannt ist. Aus Magdun, O. et al., "Prevention of harmful EDM currents in inverter-fed AC machines by use of electrostatic shields in the stator winding overhang", IECON 2010 - 36TH ANNUAL CONFERENCE ON IEEE INDUSTRIAL ELECTRONICS SOCIETY, IEEE, PISCATAWAY, NJ, USA, 7. November 2010 (2010-11-07), Seiten 962-967, XP031840554, ISBN: 978-1-4244-5225-5, sind die technischphysikalischen Zusammenhänge im Hinblick auf die Problematik der Lagerschäden bekannt. Dort ist angegeben, wie die Vergrößerung des wicklungsfreien Raums in der Statornut die kapazitive Ankopplung verändert. Zwischen Rotor und den Statorköpfen sind Abschirmringe vorgesehen, welche eine elektrostatische Abschirmung bilden und die am Stator leitend befestigt sind.

Vor diesem Hintergrund liegt der Erfindung die Aufgabe zugrunde, einen Elektromotor konstruktiv einfach und kostengünstig so auszubilden, dass auch bei Ansteuerung durch einen Frequenzumrichter oder anderen elektronischen Drehzahlsteller keine erhöhte Lagerbelastung durch solche hochfrequenten Ströme auftritt. Darüber hinaus soll ein Verfahren zur wirtschaftlichen Herstellung des erfindungsgemäßen Elektromotors bereitgestellt werden.

Diese Aufgabe wird gemäß der Erfindung durch einen Elektromotor mit den in Anspruch 1 angegebenen Merkmalen gelöst. Der verfahrensmäßige Teil dieser Aufgabe wird durch ein Verfahren mit den in Anspruch 10 angegebenen Merkmalen gelöst. Vorteilhafte Ausgestaltungen der Erfindung sind in den Unteransprüchen, der nachfolgenden Beschreibung und der Zeichnung angegeben. Dabei können die in den Unteransprüchen und der Beschreibung angegebenen Merkmale jeweils für sich aber auch in geeigneter Kombination die erfindungsgemäße Lösung gemäß Anspruch 1 weiter ausgestalten.

Der erfindungsgemäße Elektromotor weist einen Stator und einen darin rotierbar gelagerten Rotor auf. Der Stator weist einen Statorkern mit Statornuten auf, in denen Statorwicklungen aufgenommen sind, welche Wicklungsköpfe aufweisen, die sich endseitig und außerhalb der Nuten erstrecken. Zwischen den Wicklungsköpfen und dem Rotor sind Wicklungskopfabschirmungen angeordnet, wobei die Statornuten jeweils einen zum Rotor offen und wicklungsfreien Spalt aufweisen. Zwischen den in den Nuten befindlichen Wicklungsteilen und dem Spalt ist jeweils ein wicklungsfreier Raum in der Statornut gebildet ist. Dieser wicklungsfreie Raum ist vorzugsweise mit Luft gefüllt. Er besteht aus einem mit Luft oder einem anderen Füllstoff gebildeten Raum sowie dem Raum für die Nutisolierung, in dem ebenfalls keine Wicklung vorhanden ist.

Die vorliegende Erfindung ist insbesondere für einen frequenzumrichtergesteuerten Elektromotor vorgesehen, es versteht sich, dass der erfindungsgemäße Elektromotor auch in Verbindung mit jeder anderen geeigneten Ansteuerung einsetzbar ist.

Grundgedanke der vorliegenden Erfindung ist es, die in den Nuten befindlichen Wicklungsteile möglichst tief in die Nut, das heißt radial nach außen, einzugliedern, um den Abstand zwischen Wicklung und Rotor so weit zu vergrößern, dass nach Möglichkeit keine, zumindest aber eine wesentlich verminderte, insbesondere kapazitive Kopplung Erfindung für hochfrequente Ströme zwischen Rotor und Stator erfolgt. So ist gemäß der Erfindung ein wicklungsfreier Raum in jeder Statornut vorgesehen, der sich vom Spalt, das heißt vom radial äußeren Ende des Spaltes - dies ist das nutseitige Ende des Spaltes - bis zu dem in der Nut liegenden Teil der Wicklung erstreckt, der dafür sorgt, dass die kapazitive Kopplung in diesem Bereich zwischen Stator und Rotor ganz erheblich gemindert wird, typischerweise auf mindestens 40%, vorzugsweise auf 5 - 30% der maximalen kapazitiven Kopplung.

Die Bezeichnungen Rotor und Stator im Sinne der vorliegenden Erfindung dienen in erster Linie zur Unterscheidung der Bauteile, sind jedoch nicht auf deren übliche Funktionalität dahingehend, dass der Rotor innerhalb des Stators drehbar gelagert ist beschränkt, sondern sie können im Sinne der Erfindung auch kinematisch umgekehrt sein, wenn es sich beispielsweise um einen Außenläufer handelt.

Die erfindungsgemäße Ausgestaltung kann grundsätzlich mit Elektromotoren unterschiedlicher Bauart eingesetzt werden, beispielsweise Asynchronmotoren oder Permanentmagnetmotoren.

Auch wenn durch diese Maßnahme des wicklungsfreien Raumes die für den Lagerverschleiß wesentliche kapazitive Kopplung deutlich vermindert werden kann, so ist eine weitere Kopplung im Bereich zwischen den Wicklungsköpfen und Rotor gegeben. Diese wird gemäß der Erfindung durch Wicklungskopfabschirmungen deutlich reduziert, deren Ausbildung weiter unten noch im Einzelnen beschrieben ist.

Als besonders vorteilhaft hat es sich erwiesen, den radialen Abstand zwischen den in den Nuten befindlichen Wicklungsteilen und dem wicklungsfreien Spalt, also den Wicklungsteilen und den den Spalt begrenzenden seitlichen Vorsprüngen, welche die Nut zum Rotor hin begrenzen, mit mindestens zwei Millimetern zu dimensionieren. Dieser radiale Abstand, also die radiale Erstreckung des wicklungsfreien Raums in der Statornut sollte jedoch vorzugsweise zwischen drei und sieben Millimetern betragen, da dann eine nahezu vollständige kapazitive Abschirmung in diesem Bereich erreicht ist.

Um sicherzustellen, dass die Wicklung keinen Kurzschluss über den Statorkern erfährt - der Statorkern ist vorzugsweise als Statorblechpaket ausgestaltet - ist vorteilhaft eine Nutisolierung vorgesehen, welche den in der Nut befindlichen Wicklungsteil vorzugsweise vollständig umschließt. Gemäß einer vorteilhaften Ausgestaltung der Erfindung ist die Nutisolierung am Wicklungsteil anliegend angeordnet, das heißt so angeordnet, dass sie zwischen dem wicklungsfreien Raum und der Wicklung liegt. Der wicklungsfreie Raum wird somit radial nach innen durch den Spalt bzw. die beiden diesen Spalt begrenzender Vorsprünge des Statorkerns gebildet, seitlich durch die seitlichen Nutwandungen des Statorkerns und radial nach außen durch die Nutisolierung, die genau genommen auch noch Teil des wicklungsfreien Raumes ist. Eine solche Anordnung ist insbesondere fertigungstechnisch besonders vorteilhaft, da, wie weiter unten noch angegeben ist, das radiale Einpressen des in der Nut befindlichen Wicklungsteils dann unter Schutz der Nutisolierung erfolgen kann.

Die Wicklungskopfabschirmungen werden gemäß der Erfindung durch mindestens einen Abschirmring zwischen den Wicklungsköpfen und dem Rotor gebildet, der axial an den Statorkern anschließt und der elektrisch leitend mit dem Statorkern verbunden ist. Ein solcher Abschirmring ist vorteilhaft zu beiden Seiten des Statorkerns vorgesehen.

Dabei hat sich erstaunlicherweise gezeigt, dass für eine gute kapazitive Abschirmung die axiale Erstreckung des Abschirmrings durchaus kleiner als die axiale Erstreckung der davon abgeschirmten Wicklungsköpfe sein kann. Eine gute Abschirmung wird bereits erreicht, wenn die axiale Erstreckung des Abschirmrings, und zwar insbesondere die des für die Abschirmung wirksamen Metallteils des Rings, mindestens 40% der axialen Erstreckung der dadurch abgeschirmten Wicklungsköpfe beträgt. Da der größte Teil der parasitären Ströme bereits durch die Maßnahme des wicklungsfreien Raumes in jeder Statornut unterdrückt wird, kann es in der Praxis genügen, den von den Wicklungsköpfen ausgehenden Effekt lediglich deutlich zu vermindern. So kann bereits eine mehr als 50% reduzierte kapazitive Ankopplung im Bereich der Wicklungsköpfe erzielt werden, wenn die axiale Erstreckung des Abschirmrings etwa 40% der axialen Erstreckung der damit abgeschirmten Wicklungsköpfe beträgt. Die Kombination der kapazitiven Abschirmung durch ein Abschirmblech im Kopfbereich der Wicklungen und durch ein Tieferlegen der Wicklungen in den Statornuten ist besonders vorteilhaft, da sie soweit sie die Maßnahmen im Bereich der Statornuten angeht, praktisch keine Einflüsse auf die induktiven Vorgänge im Motor hat, anders als beim Einsatz von Abschirmblechen im Nutbereich. Darüber hinaus ist der Einsatz von Abschirmblechen im Nutbereich auch fertigungstechnisch problematisch, da die Bleche zum einen in die Nut eingebracht und zum anderen in der eingebrachten Stellung fixiert werden müssen. Bei dem erfindungsgemäßen Tieferlegen der Wicklung in der Nut hingegen ist lediglich das Einschieben der Wicklung in den Nutgrund, das heißt das Verpressen der Wicklung als weiterer Verfahrensschritt vorzusehen, wohingegen die übrigen Verfahrensschritte im Wesentlichen erhalten bleiben. Das ohnehin erforderliche Verbacken der Wicklung wird hier gleichzeitig zur Fixierung der Wicklung innerhalb der Nut genutzt, was von Vorteil ist.

Vorteilhaft ist der Abschirmring nicht nur elektrisch mit dem Statorkern verbunden, sondern auch an diesem befestigt. Dabei besteht der Abschirmring aus einer metallischen Abschirmung, die vorteilhaft mindestens teilweise kunststoffummantelt ist. Diese Kunststoffummantelung hat zum einen den Effekt eine elektrische Isolierung zu bilden und zum anderen kann diese eine Tragfunktion haben.

Da die Herstellung eines umschlossenen metallischen Rings aus Rundmaterial, z.B. einem Rohr vergleichsweise aufwendig ist, sieht die Erfindung vor, den metallischen Teil der Abschirmung aus einem metallischen Blechstreifen zu bildender zu einem Ring geformt ist, jedoch an der Innen- und an der Außenseite jeweils mit einem Kunststoffring versehen ist, wobei die beiden Kunststoffringe unter Eingliederung des zu einem Ring geformten Blechstreifens miteinander klippbefestigt sind. Eine solche Ausgestaltung ist insbesondere unter Verwendung eines vergleichsweise dünnen Metallblechstreifens sinnvoll. Auf diese Weise kann der die metallische Abschirmung bildende Teil durch ein kostengünstiges und dünnes Stanzteil aus Metall gebildet sein, wohingegen die Tragfunktion im Wesentlichen durch die umgebenden Kunststoffringe gebildet ist, welche zudem die elektrische Isolierung bilden. Durch die Klippbefestigung kann eine sehr einfache und automatisierte Herstellung erfolgen, wobei nach Eingliederung des Metallteils in die Kunststoffringe quasi ein Bauteil gebildet ist, welches auch wie ein Bauteil handhabbar ist.

Zur Befestigung des Abschirmrings weist vorteilhaft mindestens der eine, vorzugsweise jedoch beide Kunststoffringe axiale Vorsprünge auf, die zum Statorkern gerichtet sind und zur mechanischen Befestigung und Festlegung des Abschirmrings zum Stator dienen. Diese Vorsprünge sind entweder in gesonderten Ausnehmungen des Statorkerns oder aber bevorzugt in den axialen Enden der Statornuten eingesetzt. Dabei weist vorteilhaft auch der die eigentliche Abschirmung bildende metallische Ring, der durch einen Blechstreifen gebildet sein kann, solche zum Statorkern gerichteten Vorsprünge auf, die in Ausnehmungen oder vorzugsweise ebenfalls in den Nuten des Statorkerns eingreifen und zur elektrischen Kontaktierung mit dem Statorkern aber auch zur mechanischen Befestigung dienen, wenn diese Vorsprünge in die Nutenden eingepresst sind.

Dabei sind gemäß einer vorteilhaften Weiterbildung der Erfindung die Vorsprünge an dem durch den Blechstreifen gebildeten Ring und den Kunststoffringen so angeordnet, dass ein metallischer Vorsprung von zwei Vorsprüngen der Kunststoffringe radial innen bzw. radial außen umgeben ist. Hierdurch wird erreicht, dass selbst bei dünnen Materialstärken der metallische Vorsprung eine ausreichende Stabilität erhält. Um eine elektrische Verbindung zwischen dem metallischen Vorsprung und dem Statorkern einerseits und eine ausreichende Eigenstabilität andererseits zu gewährleisten, ist ein metallischer Vorsprung zwar von stützenden Vorsprüngen aus Kunststoff an der Innen- und Außenseite umgeben, doch überragt dieser metallische Vorsprung zumindest seitlich, das heißt in Umfangsrichtung, vorzugswei-se jedoch auch axial die Vorsprünge aus Kunststoff, so dass beim Einführen dieses aus drei aneinander anliegenden Vorsprüngen bestehende Gebildes in das Nutende eine Kontaktierung zwischen den überragenden Bereichen des metallischen Vorsprungs und dem Statorkern erfolgt.

Grundsätzlich kann der wicklungsfreie Raum, wie er gemäß der Erfindung zur kapazitiven Entkopplung im Bereich der Nuten vorgesehen ist, durch entsprechende Wicklungsverfahren geschaffen werden. Um jedoch einerseits eine hohe Wicklungsdichte innerhalb der Nut zu erreichen und andererseits den für die kapazitive Entkopplung erforderlichen Freiraum zu schaffen, ist gemäß der Erfindung ein Fertigungsverfahren vorgesehen, welches das Einbringen der Wicklungen, das heißt das Wickeln der Statorwicklungen auf üblichen Wicklungsautomaten ermöglicht, welches lediglich nachträglich eine Komprimierung der Wicklung in radialer Richtung vorsieht.

Bei dem erfindungsgemäßen Verfahren werden zunächst die Statorwicklungen in konventioneller Weise in die Statornuten eingebracht, indem der Draht beim Wickeln durch den Spalt in die Statornut eingefügt wird, und das Wicklung für Wicklung, bis die gewünschte Zahl von Wicklungen eingebracht ist. Dann werden die Wicklungen durch ein typischerweise über den Spalt eingebrachtes Werkzeug zum Nutgrund hin geschoben. Dabei können gemäß der Erfindung die Wicklungen vor dem Verschieben oder nach dem Verschieben erwärmt werden, gegebenenfalls können diese Vorgänge auch gleichzeitig oder zeitlich überlappend erfolgen. Sie werden dabei auf eine erste Temperatur erwärmt, bei welcher der Wicklungslack verbackt. Die Erwärmung erfolgt gemäß der Erfindung durch Bestromung der Wicklung. Da die Wicklung gegenüber dem Werkzeug durch die Nutisolierung geschützt ist, kann das Verschieben der Wicklung zum Nutgrund hin auch erfolgen, wenn die Wicklung bereits auf diese erste Temperatur erwärmt ist.

Allen Verfahrensvarianten gemeinsam ist jedoch, dass nach dem Verschieben der jeweiligen Wicklung zum Nutgrund hin, diese auf eine zweite Temperatur abgekühlt wird, die deutlich unter dieser ersten Temperatur liegt, jedoch typischerweise deutlich über der Umgebungstemperatur. Diese zweite Temperatur ist so gewählt, dass die Wicklung mit dem isolierenden umgebenden Lack erstarrt ist, also ihre Form ohne äußere Einflüsse nicht mehr ändert. Erst dann wird das Werkzeug, welches die Wicklung zum Nutgrund hin verschoben und dort gehalten hat, entfernt. Es wird also sichergestellt, dass der durch das Einpressen der Wicklung zum Nutgrund hin geschaffene Freiraum nicht durch elastische Rückstellkräfte der Wicklung wieder eingenommen wird. Wicklungsseitig wird dieser Freiraum radial nach außen durch die Nutisolierung begrenzt, nach innen hin durch das innere Ende des Spaltes bzw. die Seiten der den Spalt seitlich begrenzenden Vorsprünge.

Des erfindungsgemäße Verfahren erfolgt vorteilhaft der Gestalt, dass die Erwärmung auf eine erste Temperatur zwischen 180°C und 220°C, vorzugsweise etwa 200°C erfolgt, also eine Temperatur, mit der auch Wicklungen nach dem Stand der Technik verbacken werden, jedoch nachfolgend eine Abkühlung auf eine zweite Temperatur von 80°C bis 120°C, vorzugsweise auf etwa 100°C erfolgt. Bei letzterer Temperatur ist das aus Wicklungen und Wicklungslack geschaffene Gebilde soweit eigenstabil, dass es in der zum Nutgrund hin verschobenen Form und Anordnung verleibt. Fertigungstechnisch ist es also ein wesentlicher Vorteil, dass eine Abkühlung nicht bis zur oder nahe zur Umgebungstemperatur erfolgen muss, sondern dass die Presskraft, mit der das Werkzeug die Wicklung in den Nutgrund schiebt, bereits nach geraumer Zeit, wenn diese Zwischentemperatur (zweite Temperatur) erreicht ist, entfernt werden kann und somit der Fertigungsvorgang des Motors fortgesetzt werden kann.

Die Erfindung ist nachfolgend anhand eines in der Zeichnung dargestellten Ausführungsbeispiels näher erläutert. Es zeigen:
- Fig. 1: einen frequenzumrichtergesteuerten Elektromotor gemäß der Erfindung in stark vereinfachter Längsschnittdarstellung,
- Fig. 2: den Motor gemäß Fig. 1 in Explosionsdarstellung,
- Fig. 3: die Einzelheit III in Fig. 2 in vergrößerter Darstellung,
- Fig. 4: den Statorkern in axialer Ansicht,
- Fig. 5: eine vergrößerte Darstellung der Einzelheit der Fig. 4,
- Fig. 6: einen Abschirmring in Explosionsdarstellung,
- Fig. 7: eine Einzelheit des Abschirmrings in Ansicht,
- Fig. 8: ein die eigentliche Abschirmung bildendes Metallteil des Abschirmrings gemäß Fig. 6 in Abwicklung,
- Fig. 9: eine Kurve, welche die kapazitive Kopplung in Abhängigkeit der radialen Tiefe des nutfreien Raums zeigt und
- Fig. 10: eine Kurve, welche die Abhängigkeit der kapazitiven Kopplung in Abhängigkeit der Höhe des Abschirmrings bezogen auf die Höhe des Wicklungskopfes darstellt.

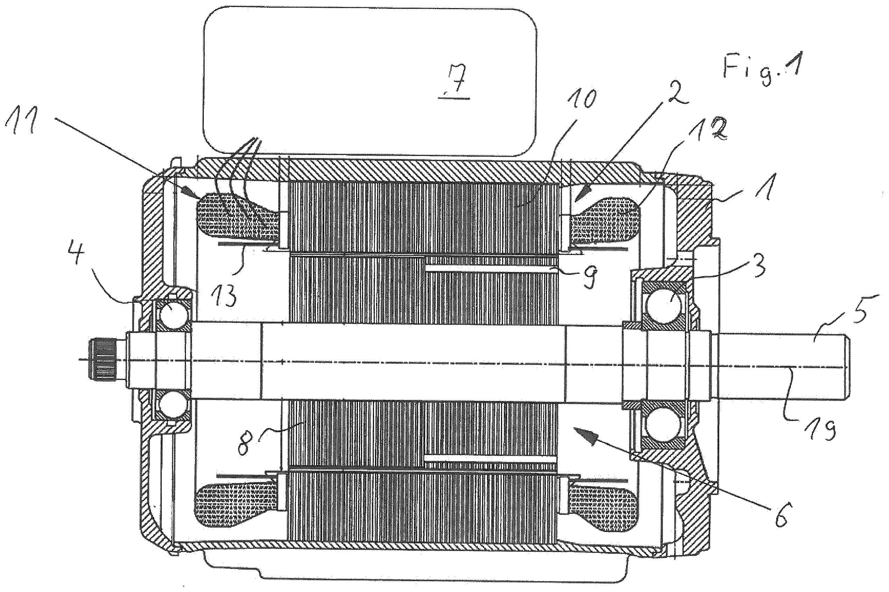

Bei dem anhand von Fig. 1 dargestellten Elektromotor handelt es sich um einen Permanentmagnetmotor, mit einem Motorgehäuse 1, in dem ein Stator 2 stationär angeordnet ist. In den Stirnseiten des Motorgehäuses sind Kugellager 3, 4 aufgenommen, in denen eine Welle 5 eines Rotors 6 drehbar gelagert ist.

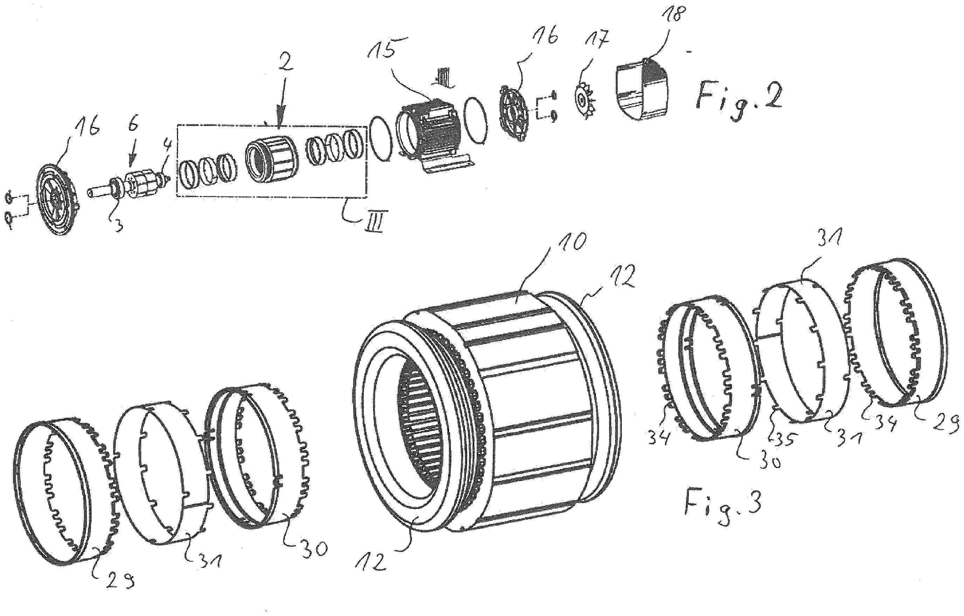

Wie die Explosionszeichnung gemäß Fig. 2 verdeutlicht, ist das Motorgehäuse 1 im Wesentlichen aus drei Teilen gebildet, nämlich einem zylindrischen, den Stator 2 aufnehmenden Gehäuseteil 15 mit außenliegenden und parallel zur Drehachse verlaufenden Kühlrippen sowie zwei stirnseitigen Deckeln 16, in denen die Kugellager 3, 4, welche den Rotor 6 lagern, aufgenommen sind. Zur Aufnahme eines Frequenzumrichters 7 ist eine die Planfläche an der Oberseite des Motorgehäuses 1 vorgesehen, wo dieser befestigt wird. Weiterhin sichtbar in Fig. 2 ist ein Lüfterrad 17 sowie eine Lüfterhaube 18. Das Lüfterrad 17 sitzt auf der Welle 5 und erzeugt in an sich bekannter Weise einen Kühlluftstrom zwischen Lüfterhaube 18 und dem zylindrischen Gehäuseteil 15, dort wo die Kühlrippen angeordnet sind.

Bei dem dargestellten Motor handelt es sich um einen Permanentmagnetmotor, der über einen dem Motor vorgeschalteten Frequenzumrichter 7, der am Motorgehäuse 1 angebracht ist, angesteuert wird. Der Rotor 6 weist ein Rotorblechpaket 8 auf, in dem Magnete 9 eingegliedert sind. In der dargestellten Ausführungsform ist das Blechpaket hälftig geteilt, wobei die Magnete 9 der beiden Hälften einen gewissen Winkelversatz aufweisen. Das Rotorblechpaket 8 mit den Magneten 9 ist fest mit der Welle 5 verbunden und drehbar innerhalb des Stators 2 angeordent, welcher einen Statorkern 10 in Form eines Statorblechpaketes 10 aufweist, in den Motorwicklungen 11 angeordnet sind. Zwischen den Wicklungsköpfen 12 der Motorwicklungen 11 und dem Rotor 6, ist in axialer Fortsetzung des Statorkerns 10 zu beiden Seiten ein Abschirmring 13 angeordnet. Die Abschirmringe 13 in Verbindung mit den im nachfolgenden noch beschriebenen Nut-/Wicklungsausbildungen stellen eine kapazitive Abschirmung dar und verhindern, die Einkoppelung hochfrequenter Ströme, wie sie im Frequenzumrichter 7 typischerweise als Oberwellen entstehen, die von den Statorwicklungen 11 in den Rotor 6 induziert werden und dort über die Lager 3, 4 in das Motorgehäuse 1 abfließen und kurzgeschlossen werden. Um diese insbesondere für Oberflächen der Wälzkörper in den Lagern 3, 4 schädlichen Ströme zu verhindern, sind bei dem beschriebenen Motor entsprechende Abschirmmaßnahmen getroffen.

Diese Abschirmmaßnahmen betreffen zum einen die Anordnung der Motorwicklungen 11 in den Nuten 14 des Statorkerns 10 sowie die Anordnung der Abschirmringe 13.

Der Statorkern 10 mit den in den Statornuten 14 angeordneten Motorwicklungen 11 ist in Fig. 3 vereinfacht hinsichtlich der Wicklungsköpfe 12 dargestellt, die dort vereinfacht als wulstartige Ringe abgebildet sind. Es versteht sich, dass es sich hierbei um die üblichen Wicklungsköpfe handelt, welche die in zwei Nuten 14 des Statorkerns 10 angeordneten Wicklungsteile miteinander verbinden.

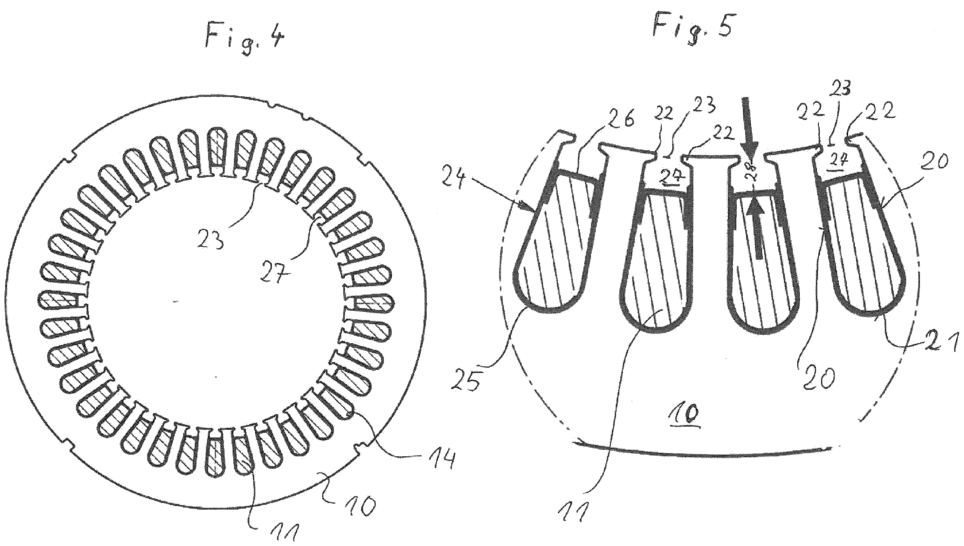

Die Anordnung der Motorwicklungen 11 im Bereich der Statornuten 14 ist anhand der Fig. 4 und 5 dargestellt. Jede Nut 14, die im Statorkern 10 ausgebildet ist, erstreckt sich über die gesamte Länge des Statorblechpaketes 10, welches den Statorkern 10 bildet. Die Nuten 14 sind parallel zur Motorachse 19 angeordnet und werden durch jeweils zwei im Wesentlichen radial zur Motorachse 19 verlaufende seitliche Wandungen 20 begrenzt, die kreisbogenförmig über den Nutgrund 21 hin zusammengeführt sind. Der Nutgrund 21 bildet den radial weitest außenliegenden Teil einer Nut 14. Radial nach innen gehen die seitlichen Wandungen 20 in Vorsprünge 22 über, welche etwa tangential verlaufen und einen Spalt 23 bilden, welcher den zum Rotor 6 hin offenen Teil der Nut 14 bildet. Der Spalt 23 ist schmal, wicklungsfrei und erstreckt sich über die gesamte Länge der Nut 14, über diesen wird die jeweilige Wicklung 11 in die Nut 14 eingebracht.

An der Innenseite ist jede Nut 14 mit einer Nutisolierung 24 ausgekleidet, welche die in der Nut 14 befindliche Wicklung vollständig umschließt und gegenüber dem metallischen Blechpaket 10 elektrisch isoliert und schützt. Die Nutisolierung 24 besteht aus zwei im Wesentlichen U-förmigen Isolierungsteilen 25 und 26. Der Nutisolierungsteil 25 erstreckt sich über den Nutgrund 21 bis nahe zu den Vorsprüngen 22 längs der seitlichen Wände 20. Der andere Teil 26 der Nutisolierung 24 erstreckt sich vom radial inneren Ende der Wicklung mit Abstand zu den Vorsprüngen 22 bzw. dem dazwischen gebildeten Spalt 23 über etwa ein Drittel der Länge der seitlichen Wände 20. Die Nutisolierungsteile 26 und 25 überlappen einander und greifen ineinander, wie dies anhand von Fig. 5 dargestellt ist, derart, dass auch in telekopierter, das heißt auseinandergezogener Stellung sichergestellt ist, dass die Nut 14 vollständig mit der Nutisolierung 24 ausgekleidet ist.

Bei der vorliegenden Motorkonstruktion sind die Motorwicklungen 11 nicht nutfüllend im Statorkern 11 angeordnet, sondern, wie weiter oben beschrieben, in Richtung zum Nutgrund 21 derart verschoben, dass ein Freiraum 27 gebildet ist, der wicklungsfrei ist. Durch diese Anordnung ist erreicht, dass die Motorwicklungen 11 mit einem radialen Abstand 28 zum Spaltende bzw. zur Innenseite der Vorsprünge 22 angeordnet sind. Dadurch ergibt sich ein freier Abstand zum Rotor 6, der wesentlich für die kapazitive Abschirmung in diesem Bereich ist.

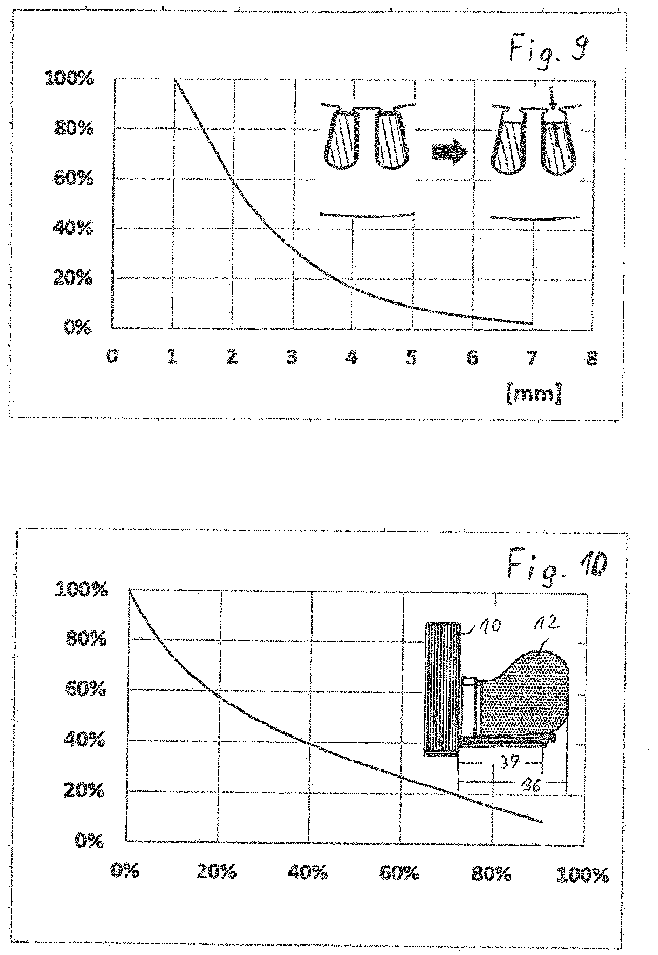

Anhand von Fig. 9 ist dargestellt, welche Abschirmwirkung bei welchem Abstand in Millimetern gegeben ist. Dabei ist bei einem Abstand von 1 mm vom 100% kapazitiver Kopplung ausgegangen, wobei diese 1 mm die radiale Erstreckung des Spalts 23 betreffen, also den Punkt, wo der Abstand 28 Null ist, das heißt wo noch kein wicklungsfreier Raum vorhanden ist. Setzt man die dann entstehende kapazitive Kopplung zu 100%, so ist ersichtlich, in welchem Umfang diese mit zunehmendem Abstand 28 abnimmt. Wird der Abstand 28, das heißt der Freiraum 27 in seiner radialen Erstreckung auf 1,5 mm ausgedehnt (entspricht 2,5 mm in Fig. 9), so beträgt die kapazitive Kopplung nur noch 40%, bei 4 mm (entspricht 5 mm in Fig. 9) liegt sie im Bereich von 5%. Es ist also ersichtlich, dass bereits dann, wenn der Abstand 28 von 4 mm gewählt wird, mehr als 90% der kapazitiven Kopplung gegenüber einem konventionellen Motor nach dem Stand der Technik im Bereich zwischen Stator und Rotor vermieden werden kann. Dabei ist der konventionelle Stator in Fig. 9 links symbolisiert, der lediglich den wicklungsfreien Spalt 23 aufweist, und die erfindungsgemäße Anordnung rechts mit wicklungsfreiem Raum 27.

Fertigungstechnisch einfach können die Motorwicklungen 11 in konventioneller Weise erzeugt werden, in dem der Wicklungsdraht über Spalten 23 in die jeweiligen Nuten gewickelt wird, bis diese einen nahezu vollständigen Füllgrad erhalten haben. So dann wird durch ein Werkzeug nach Aufheizen der Wicklung auf eine Verbacktemperatur, in welcher der Wicklungslack angeschmolzen wird, diese vom Spalt 23 aus radial nach außen zusammengeschoben. Die Kraftaufbringung erfolgt über ein Werkzeug, welches nicht unmittelbar an der Wicklung angreift, sondern über den inneren Teil 26 der Nutisolierung 24, wodurch die Wicklung selbst vor dem Werkzeug geschützt wird. Nachdem die Motorwicklung in der Nut 14 auf das gewünschte Maß zusammengeschoben worden ist und so der gewünschte Freiraum 27 mit dem Abstand 28 erzeugt worden ist, wird die Wicklung soweit abgekühlt, dass keinerlei Rückstellkräfte mehr auftreten und die Anordnung eigenstabil verbleibt. Bereits dann können weitere Fertigungsschritte eingeleitet werden, bevor die Wicklung auf Umgebungstemperatur zurückgekühlt ist.

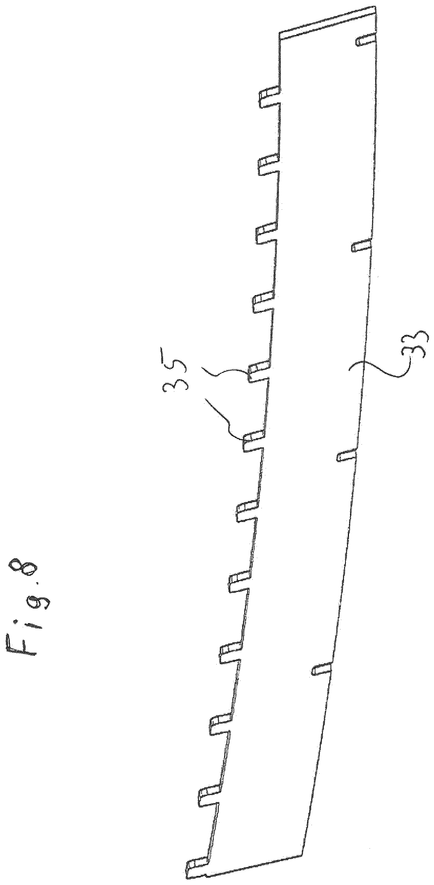

Um auch die Wicklungsköpfe 12 wirksam kapazitiv abzuschirmen, sind Abschirmringe 13 vorgesehen. Diese Abschirmringe 13 bestehen jeweils aus einem aus Kunststoff bestehenden Außenring 29, einem aus Kunststoff bestehenden Innenring 30 sowie der eigentlichen Abschirmung in Form eines metallischen Rings 31. Der Innenring 30 und Außenring 29 sind durch elastische Zungen 32 miteinander klippbefestigbar, wobei der metallische Ring 31 zwischen diesen Ringen 29 und 30 eingegliedert ist. Der metallische Ring 31 ist aus einem Stanzteil in Form eines Blechstreifens 33 gebildet, welches durch Biegen in die ringförmige Form gebracht ist. Das Blechteil 33, welches in Fig. 8 in abgewickelter Form dargestellt ist, ist 0,2 mm dick, erhält seine Eigenstabilität daher im Wesentlichen durch die innen und außen angeordneten Kunststoffringe 29 und 30.

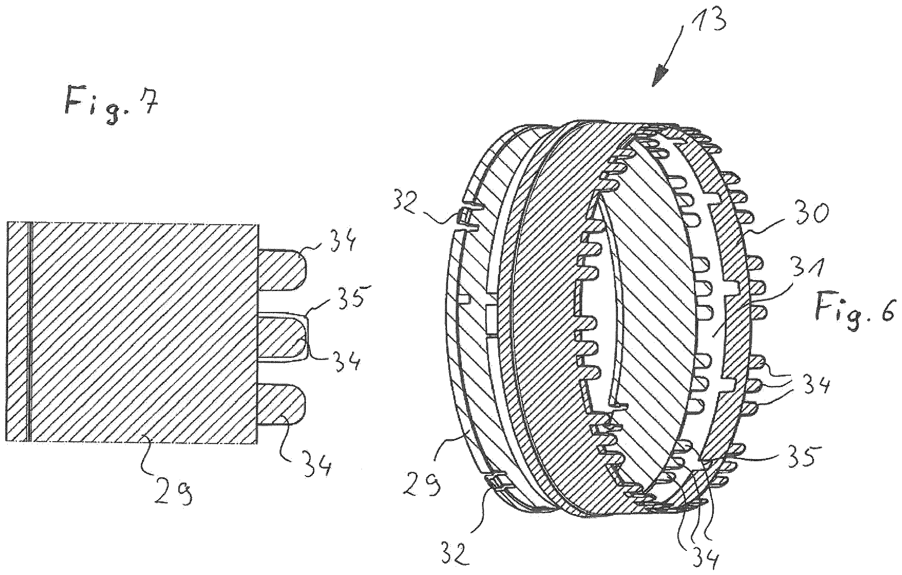

Die Innen- und Außenringe 29, 30 weisen an ihren axialen Enden Vorsprünge 34 auf, die jeweils in Dreiergruppen in gleichem Abstand über den Ring umfangsmäßig verteilt angeordnet sind. Die Anordnung ist derart, dass diese Dreiergruppen von Vorsprüngen 34 bei zusammengeklippten Außen- und Innenring 29, 30 nebeneinander, das heißt radial in Flucht zueinander liegen. Auch der metallische Ring 31 weist Vorsprünge 35 auf, jedoch zu jeder Dreiergruppe der Vorsprünge 34 jeweils nur einen Vorsprung 35. Während die Vorsprünge 34 an den Kunststoffringen 29 und 30 eine gerundete Form aufweisen, wie dies insbesondere aus Fig. 7 ersichtlich ist, sind die metallischen Vorsprünge 35 ebenfalls gerundet, jedoch eckiger, insbesondere überragen sie die innen und außen anliegenden Vorsprünge 34 sowohl seitlich als auch axial. Hierdurch ergibt sich im Bereich eines metallischen Vorsprungs 35 ein Gebilde aus insgesamt drei Vorsprüngen, nämlich einem mittleren Vorsprung 34 einer Dreiervorsprunggruppe eines Innenrings 30, eines daran anliegenden Vorsprungs 35 des metallischen Rings 31 sowie eines daran außen anliegenden Vorsprungs 34 einer Dreiergruppe von Vorsprüngen 34 des Außenrings 29. Diese Gebilde bestehend aus aneinander liegenden Vorsprüngen 34 und 35 und bilden eine Art Steckkontakt, die dafür sorgen, dass beim Einstecken der Vorsprünge 34, 35 in die Enden der Nuten 14 des Statorkerns 10 zum einen eine mechanische Festlegung zum anderen jedoch eine elektrische Kontaktierung erfolgt, welche den metallischen Ring 31 mit dem Statorkern 10 elektrisch verbindet. In dem vorstehend beschriebenen Ausführungsbeispiel sind insgesamt 12 Vorsprünge 35 und zweimal 36 Vorsprünge 34 an einem Abschirmring 13 vorgesehen, die in die entsprechenden stirnseitigen Enden der Nuten 14 eingreifen. In dem dargestellten Motor sind 48 Nuten 14 vorgesehen, auch wenn in Fig. 4 aus Gründen der Übersichtlichkeit eine andere Anzahl dargestellt ist.

Grundsätzlich kann der Abschirmring 13 auch in anderer Weise elektrisch mit dem Statorkern 10 verbunden werden, es müssen jedoch zu einer wirksamen Abschirmung mindestens vier über den Umfang möglichst gleich verteilte elektrische Verbindungen geschaffen werden, um eine wirksame Abschirmung gegen hochfrequente Ströme sicherzustellen.

Der Abschirmring 13 muss sich zur wirksamen kapazitiven Entkopplung nicht notwendigerweise über die gesamte axiale Länge 36 eines Wicklungskopfes 12 erstrecken, es genügt vielmehr, eine axiale Länge 37 die deutlich geringer ist. Der Zusammenhang zwischen diesen Größen ist anhand von Fig. 10 dargestellt. Dabei ist auf der vertikalen Achse analog zur Fig. 9 die kapazitive Kopplung dargestellt und auf der horizontalen Achse das Verhältnis der axialen Länge 37 zur axialen Länge 36 des Wicklungskopfes. Anhand dieses Diagrammes ist ersichtlich, dass bereits eine axiale Länge 37 von 40% der axialen Länge 36 eines Wicklungskopfes 12 ausreicht, um die kapazitive Kopplung auf 40% des Ursprungswertes zu reduzieren. Bei 70% der Länge ergibt sich bereits eine Reduzierung auf unter 20%. Dabei ist zu berücksichtigen, dass die kapazitive Kopplung im Bereich der Wicklungsköpfe größenordnungsmäßig deutlich geringer als in dem Bereich zwischen Statorkern 10 und Rotor 6 ist.

### Bezugszeichenliste

- 1: Motorgehäuse
- 2: Stator
- 3: Kugellager
- 4: Kugellager
- 5: Welle
- 6: Rotor
- 7: Frequenzumrichter
- 8: Rotorblechpaket
- 9: Magnete
- 10: Statorkern, Statorblechpaket
- 11: Motowicklungen
- 12: Wicklungsköpfe
- 13: Abschirmring
- 14: Statornuten
- 15: zylindrischer Gehäuseteil
- 16: Deckel
- 17: Lüfterrad
- 18: Lüfterhaube
- 19: Motorachse
- 20: seitliche Nutwandungen
- 21: Nutgrund
- 22: Vorsprünge der Nut
- 23: Spalt zwischen den Vorsprüngen 22
- 24: Nutisolierung
- 25: radial äußerer Teil der Nutisolierung
- 26: radial innerer Teil der Nutisolierung
- 27: Freiraum
- 28: radialer Abstand zwischen Wicklung und dem Spalt 23/ den Vorsprüngen 22
- 29: Außenring
- 30: Innenring
- 31: metallischer Ring
- 32: elastische Zungen
- 33: Blechstreifen
- 34: Vorsprünge am Außen- und Innenring
- 35: Vorsprünge am metallischen Ring
- 36: axiale Länge von 12
- 37: axiale Länge von 13

## Patentansprüche

1. Elektromotor mit einem Stator (2) und einem darin rotierbar gelagerten Rotor (6), bei dem der Stator (2) einen Statorkern (10) mit Statornuten (14) aufweist, in denen Statorwicklungen (11) aufgenommen sind, welche Wicklungsköpfe (12) aufweisen, die sich endseitig und außerhalb der Nuten (14) erstrecken, wobei zwischen den Wicklungsköpfen (12) und dem Rotor (6) Wicklungskopfabschirmungen (13) angeordnet sind, wobei die Statornuten (14) jeweils einen zum Rotor (6) offenen und wicklungsfreien Spalt (23) aufweisen und zwischen den in den Nuten (14) befindlichen Wicklungsteilen und dem Spalt (23) jeweils ein wicklungsfreier Raum (27) in der Statornut (14) gebildet ist, und wobei die Wicklungskopfabschirmungen (13) mindestens einen Abschirmring (13) zwischen den Wicklungsköpfen (12) und dem Rotor (6) aufweisen, der axial an den Statorkern (10) anschließt und der elektrisch leitend mit dem Statorkern (10) verbunden ist, **dadurch gekennzeichnet, dass** der Abschirmring (13) einen metallischen Blechstreifen (33) aufweist, der zwischen zwei Kunststoffringen (29, 30) eingegliedert ist, die miteinander unter Einschluss des umlaufenden Blechstreifens (33) clipbefestigt sind.

2. Elektromotor nach Anspruch 1, **dadurch gekennzeichnet, dass** der wicklungsfreie Raum (27) in seiner radialen Erstreckung (28) so dimensioniert ist, dass die kapazitive Kopplung zum Rotor (6) im Wesentlichen unterbunden ist.

3. Elektromotor nach Anspruch 1 oder 2, **dadurch gekennzeichnet, dass** der radiale Abstand (28) zwischen den in den Nuten (14) befindlichen Wicklungsteilen und dem wicklungsfreien Spalten (23) jeweils mindestens 2mm, vorzugsweise zwischen 3mm und 7mm beträgt.

4. Elektromotor nach einem der vorhergehenden Ansprüche, bei dem eine Nutisolierung (24) vorgesehen ist, welche die Wicklung (11) gegenüber dem Statorkern (10) elektrisch isoliert, und dass die Nutisolierung (26) zwischen dem wicklungsfreien Raum (27) und der Wicklung (11) an dieser anliegend angeordnet ist.

5. Elektromotor nach einem der vorhergehenden Ansprüche, **dadurch gekennzeichnet, dass** der Abschirmring (13) eine axiale Erstreckung (37) aufweist, welche mindestens 40% der axialen Erstreckung (36) der dadurch abgeschirmten Wicklungsköpfe (12) entspricht.

6. Elektromotor nach einem der vorhergehenden Ansprüche, **dadurch gekennzeichnet, dass** der Abschirmring (13) am Statorkern (10) befestigt ist.

7. Elektromotor nach einem der vorhergehenden Ansprüche, **dadurch gekennzeichnet, dass** einer der Kunststoffringe (29), vorzugsweise beide Kunststoffringe (29, 30) zum Statorkern (10) gerichtete Vorsprünge (34) aufweist, mit denen der Abschirmring (13) in Ausnehmungen, vorzugsweise Nuten (14) am Statorkern (10) eingreift.

8. Elektromotor nach einem der vorhergehenden Ansprüche, **dadurch gekennzeichnet, dass** der Blechstreifen (33) zum Statorkern (10) gerichtete Vorsprünge (35) aufweist, die in Ausnehmungen, vorzugsweise Nuten (14) des Statorkerns (10) eingreifen und diesen elektrisch leitend mit dem Statorkern (10) verbinden.

9. Elektromotor nach einem der vorhergehenden Ansprüche, **dadurch gekennzeichnet, dass** ein Vorsprung (35) des Blechstreifens (33) zwischen zwei Vorsprüngen (34) der Kunststoffringe (29, 30) angeordnet ist und dass der Vorsprung (35) des Blechstreifens (33) die radial benachbarten Vorsprünge (34) der Kunststoffringe (29, 30) mindestens seitlich und vorzugsweise auch axial überragt.

10. Verfahren zum Herstellen eines Stators (2) für einen Elektromotor nach einem der Ansprüche 1 bis 9, bei dem die Statorwicklungen (11) in die Statornuten (14) eingebracht werden, bei dem die Wicklungen (11) in den Nuten (14) zum Nutgrund (21) hin geschoben werden, bei dem die Wicklungen durch Bestromung auf eine erste Temperatur erwärmt werden und bei dem die Wicklungen auf eine zweite Temperatur abgekühlt werden.

11. Verfahren nach Anspruch 10, bei dem die Statorwicklungen (11) zunächst auf die erste Temperatur hin erwärmt, dann zum Nutgrund (21) hin geschoben werden und nachfolgend auf die zweite Temperatur abgekühlt werden.

12. Verfahren nach Anspruch 10, bei dem die Statorwicklungen (11) zum Nutgrund (21) hin geschoben werden, wonach die Erwärmung und die nachfolgende Abkühlung erfolgt.

13. Verfahren nach Anspruch 10 oder 11, bei dem die Statorwicklungen (11) vor und/oder während und bis zur Abkühlung zum Nutgrund (21) hin kraftbeaufschlagt werden.

14. Verfahren nach einem der vorhergehenden Ansprüche, bei dem die Erwärmung auf eine Temperatur zwischen 180°C und 220°C, vorzugsweise etwa 200° C und die nachfolgende Abkühlung auf 80°C bis 120°C erfolgt, vorzugsweise auf etwa 100°C erfolgt.

## Claims

1. An electric motor with a stator (2) and with a rotor (6) which is rotatably mounted therein, with which the stator (2) comprises a stator core (10) with stator grooves (14), in which stator windings (11) are received, said stator windings comprising end-windings (12) which extend at the end side and outside the grooves (14), wherein end-winding shields (13) are arranged between the end-windings (12) and the rotor (6), wherein the stator grooves (14) each comprise a winding-free gap (23) which is open to the rotor (6), and a winding-free space (27) is each formed in the stator groove (14), between the winding parts which are located in the grooves (14) and the gap (23), and wherein the end-winding shields (13) comprise at least one shielding ring (13) between the end-windings (12) and the rotor (6), said ring connecting axially onto the stator core (10) and being electrically connected to the stator core (10), **characterised in that** the shielding ring (13) comprises a metallic sheet metal strip (33) which is integrated between two plastic rings (29, 30) which are clip-fastened to one another amid the inclusion of the peripheral sheet-metal strip (33).

2. An electric motor according to claim 1, **characterised in that** the winding-free space (27) in its radial extension (28) is dimensioned such that the capacitive coupling to the rotor (6) is essentially prevented.

3. An electric motor according to claim 1 or 2, **characterised in that** the radial distance (28) between the winding parts which are located in the grooves (14) and the winding-free gaps (23) in each case is at least 2 mm, preferably between 3 mm and 7 mm.

4. An electric motor according to one of the preceding claims, **characterised in that** a groove insulation (24) which electrically insulates the winding (11) with respect to the stator core (10) is provided, and that the groove insulation (26) is arranged between the winding-free space (27) and the winding (11), in a manner bearing on this winding.

5. An electric motor according to one of the preceding claims, **characterised in that** the shielding ring (13) has an axial extension (37) which corresponds to at least 40% of the axial extension (36) of the end-windings (12) which are shielded by way of this.

6. An electric motor according to one of the preceding claims, **characterised in that** the shielding ring (13) is fastened on the stator core (10).

7. An electric motor according to one of the preceding claims, **characterised in that** one of the plastic rings (29), preferably both plastic rings (29, 30) comprises projections (34) which are directed to the stator core (10) and with which the shielding ring (13) engages in recesses, preferably grooves (14) on the stator core (10).

8. An electric motor according to one of the preceding claims, **characterised in that** the sheet metal strip (33) comprises projections (35) which are directed to the stator core (10), engage into recesses, preferably grooves (14) of the stator core (10) and connect the sheet strip to the stator core (10) in an electrically conductive manner.

9. An electric motor according to one of the preceding claims, **characterised in that** a projection (35) of the sheet metal strip (33) is arranged between two projections (34) of the plastic rings (29, 30) and that the projection (35) of the sheet metal strip (33) at least laterally and preferably also axially projects beyond the radially adjacent projections (34) of the plastic rings (29, 30).

10. A method for manufacturing a stator (2) for an electric motor according to one of the claims 1 to 9, with which the stator windings (11) are incorporated into the stator grooves (14), with which the windings (11) in the grooves (14) are pushed towards the groove base (21), with which the windings are heated to a first temperature by way of current supply and with which the windings are cooled to a second temperature.

11. A method according to claim 10, with which the stator windings (11) are firstly heated to the first temperature, are then pushed towards the groove base (21) and subsequently cooled to the second temperature.

12. A method according to claim 10, with which the stator windings (11) are pushed towards the groove base (21), whereupon the heating and the subsequent cooling is effected.

13. A method according to claim 10 or 11, with which the stator windings (11) are subjected to force towards the groove base (21) before and/or during and up to the cooling.

14. A method according to one of the preceding claims, with which the heating to a temperature between 180°C and 220°C, preferably about 200°C is effected, and the subsequent cooling to 80°C to 120°C is effected, preferably to about 100°C.

## Revendications

1. Moteur électrique équipé d'un stator (2) et d'un rotor (6) monté pour pouvoir tourner dans ce dernier, dans lequel le stator (2) présente un noyau de stator (10) pourvu d'encoches de stator (14) dans lesquelles sont logés des enroulements statoriques (11) qui présentent des têtes d'enroulement (12) qui s'étendent côté extrémité et à l'extérieur des encoches (14), des protections de tête d'enroulement (13) étant disposées entre les têtes d'enroulement (12) et le rotor (6), dans lequel les encoches de stator (14) comportent chacune une fente (23) ouverte vers le rotor (6) et dépourvue d'enroulement, et un espace (27) dépourvu d'enroulement est respectivement formé dans l'encoche de stator (14) entre les parties d'enroulement situées dans les encoches (14) et la fente (23), et dans lequel les protections de tête d'enroulement (13) présentent au moins un anneau de blindage (13) entre les têtes d'enroulement (12) et le rotor (6), qui se raccorde axialement au noyau de stator (10) et qui est relié de manière électriquement-conductrice au noyau de stator (10),
**caractérisé en ce que** l'anneau de blindage (13) comporte une bande de tôle métallique (33) qui est incorporée entre deux bagues en matière plastique (29, 30) qui sont fixées entre elles par clip, en incluant la bande métallique (33) périphérique.

2. Moteur électrique selon la revendication 1, **caractérisé en ce que** l'espace (27) dépourvu d'enroulement est dimensionné dans son étendue radiale (28) de façon telle que le couplage capacitif au rotor (6) est essentiellement empêché.

3. Moteur électrique selon la revendication 1 ou 2, **caractérisé en ce que** la distance radiale (28) entre les parties d'enroulement situées dans les encoches (14) et les fentes (23) dépourvues d'enroulement est respectivement d'au moins 2 mm, de préférence comprise entre 3 mm et 7 mm.

4. Moteur électrique selon l'une des revendications précédentes, dans lequel est prévue une isolation d'encoche (24) qui isole électriquement l'enroulement (11) vis à vis du noyau de stator (10), et dans lequel l'isolation d'encoche (26) est disposée entre l'espace (27) dépourvu d'enroulement et l'enroulement (11) en appui contre ce dernier.

5. Moteur électrique selon l'une des revendications précédentes, **caractérisé en ce que** l'anneau de blindage (13) présente une étendue axiale (37) qui correspond à au moins 40 % de l'étendue axiale (36) des têtes d'enroulement (12) protégées par celui-ci.

6. Moteur électrique selon l'une des revendications précédentes, **caractérisé en ce que** l'anneau de blindage (13) est fixé sur le noyau de stator (10).

7. Moteur électrique selon l'une des revendications précédentes, **caractérisé en ce que** l'une des bagues en matière plastique (29), de préférence les deux bagues en matière plastique (29, 30), présente(nt) des saillies (34) orientées vers le noyau de stator (10), grâce auxquelles l'anneau de blindage (13) vient en prise dans des évidements, de préférence des encoches (14) sur le noyau de stator (10).

8. Moteur électrique selon l'une des revendications précédentes, **caractérisé en ce que** la bande métallique (33) présente des saillies (35) orientées vers le noyau de stator (10), qui s'engagent dans des évidements, de préférence des encoches (14) du noyau de stator (10), et relient celle-ci au noyau de stator (10) de manière électriquement conductrice.

9. Moteur électrique selon l'une des revendications précédentes, **caractérisé en ce qu'**une saillie (35) de la bande métallique (33) est disposée entre deux saillies (34) des bagues en matière plastique (29, 30) et **en ce que** la saillie (35) de la tôle métallique (33) dépasse au moins latéralement, et de préférence également axialement, des saillies (34) radialement adjacentes des bagues en matière plastique (29, 30).

10. Procédé de fabrication d'un stator (2) pour moteur électrique selon l'une des revendications 1 à 9, dans lequel les enroulements de stator (11) sont appliqués dans les encoches de stator (14), dans lequel les enroulements (11) sont poussés dans les encoches (14) à fond d'encoche (21), dans lequel les enroulements sont chauffés jusqu'à une première température par le passage du courant, et dans lequel les enroulements sont refroidis à une seconde température.

11. Procédé selon la revendication 10, dans lequel les enroulements de stator (11) sont tout d'abord chauffés jusqu'à une première température, puis poussés à fond d'encoche (21) et ensuite refroidis à la seconde température.

12. Procédé selon la revendication 10, dans lequel les enroulements de stator (11) sont poussés à fond d'encoche (21), après quoi sont opérés le chauffage et le refroidissement subséquent.

13. Procédé selon la revendication 10 ou 11, dans lequel les enroulements de stator (11) sont sollicités par une force en direction du fond (21) de l'encoche avant et/ou pendant et jusqu'au refroidissement.

14. Procédé selon l'une des revendications précédentes, dans lequel le chauffage a lieu jusqu'à une température comprise entre 180 °C et 220 °C, de préférence jusqu'à environ 200°C, et le refroidissement subséquent jusqu'à une température comprise entre 80 °C et 120°C, de préférence jusqu'à environ 100°C.
